# EUROPEAN PATENT APPLICATION

(11) **EP 1 681 325 A1**
(43) Date of publication of application: **19.07.2006**
(21) Application number: 04787845.9
(22) Date of filing: 10.09.2004
(51) Int. Cl.: C09D 183/04, C09D 133/00, C09D 201/00

(54) **COATING MATERIAL**

(30) Priority: 11.09.2003 JP 2003319972; 18.09.2003 JP 2003325955
(71) Applicant: Hanawa, Ryuzaburo, Tokyo 1950062 (JP); Kabushiki Kaisha ZAC, Tokyo 165-0025 (JP)
(72) Inventor: HANAWA, Ryuzaburo, 1950062 (JP); OGAWA, Akira, Machida-shi, Tokyo 1950062 (JP); OHTAGAKI, Yohji, 1680063 (JP)
(74) Representative: Jones, Helen M.M.
(86) International application number: PCT/JP2004/013205
(87) International publication number: WO 2005/026276

(57) **Abstract**

A first coating material for an outer wall which comprises titanium dioxide as a photocatalyst and apatite comprising calcium phosphate for adsorbing contaminants, as main components, and a polymethoxy polysiloxane as a hydrophilic resin coating material being incorporated and dissolved therein: and a second coating material for an inner wall which comprises the components of the first coating material and also a thiosulfato silver complex as an antibacterial material being incorporated and molten therein. The first coating material can be used for making harmful substances attached onto an outer surface of a wall or the like to be harmless and improving anti-staining properties thereof, and the second surface can be further used for converting pollutants such as various bacteria floating in a room to harmless materials and clarifying an interior environment.

## Description

### BACKGROUND OF THE INVENTION

### 1. Field of the Invention

The present invention relates to coating material with apatite comprising titanium dioxide and calcium phosphate used as an active ingredient, which provides functions such as decomposition of contaminants, antifouling, antibacterial activity, antifungal action, and others.

### 2. Description of the Related Art

Titanium dioxide is a semiconductor photocatalyst and when it is irradiated with ultraviolet rays, etc., titanium dioxide adsorbs ultraviolet rays, gets into an excided state, is activated, and generates hydroxyl radicals, and in the event that nitrogen oxides (NOx) and sulfur oxides (SOx) which are air pollutants are adsorbed to them, titanium dioxide decomposes these harmful substances with its strong oxidizing force to carbon dioxide and water and detoxifies these air pollutants. In addition, in the event that organic matters such as airborne fungi, various bacteria, and others which float in a room are adsorbed, titanium dioxide decomposes these organic matters to carbon dioxide and water with its strong oxidizing force.

Because catalyst titanium dioxide itself does not undergo chemical change in such decomposition process, photocatalyst reactions continuously occur semipermanently.

In recent years, using the characteristics of titanium dioxide as a photocatalyst, titanium dioxide is commercialized in applications as deodorization such as air purification systems, deodorizing filters, etc. and detoxification of harmful substances, and in applications as contamination prevention of outer walls, etc. of architectural structures, that is, applications as antifouling coating material.

However, these applied products have not gained in popularity under the present conditions. The reason is that though the photocatalyst causes surface reactions, harmful substance particles to be decomposed are not brought into contact with the catalyst titanium dioxide, and even when the photocatalyst is irradiated with light, titanium dioxide is not activated and decomposition does result.

Therefore, in order to improve this decomposition efficiency, by coating the surface of titanium dioxide fine particles with apatite, antifouling coatingmaterial for outer walls is proposed, which prevents titanium dioxide fine particles from coming in direct contact with base material of walls, etc. and which enables adsorption and decomposition of harmful substances only that enter through apatite gas cavities without damagingbase material and the coated surface, (see Patent Document 1).

Furthermore, the silver complex is known as metal which provides antibacterial, antifungal, deodorizing, and other functions, and applying coating material with a silver complex to walls, etc. of hospital rooms is contributory to prevention of hospital-acquired infections. In addition, using plastics with a silver complex added, toys for babies, rings of handstraps of buses and trains, handrails of stairs of public building facilities, etc. are made, and products concerning coating material with antibacterial and antifungal functions have been developed (see Patent Document 2).

### P. 2

Therefore, mixing a silver complex with titanium dioxide can exhibit functions combining the useful properties which these substances have. The use of this mixture substance have possibilities of materializing various products as coating material for inner walls, including applications as deodorization and detoxification of environmental pollutants, such as air purifiers, deodorizing filters, etc.
Patent Document 1: Japanese Patent Application Laid-Open Publication No. 2002-172332
Patent Document 2: Japanese Patent Application Laid-Open Publication No. Hei 10-1338580

However, conventional coating material had the following problems:
(1) As coating material for outer walls, for example, when titanium dioxide is applied to walls, etc. of architectural structures, primer resin, etc. are required, but since the primer resin, etc. are organic substances, titanium dioxide decomposes the primer and degradation phenomena of wall material, etc. by exposed titanium dioxide, that is, phenomena called chalking and powdering occur, and some kind of surface preparation as protection of walls, etc. from degradation, such as treatment to increase primer thickness, etc. is required, but this has a problem of conversely degrading decomposition performance of titanium dioxide.
(2) On the other hand, since harmful substances are not always uniformly dispersed in the atmosphere, photocatalytic reactions take place locally and nonuniformly, causing a problem that high-efficiency photocatalytic reactions cannot be expected.
(3) In addition, applying and drying a photocatalytic melt to the walls and other base material or coated surfaces, a thin film of photocatalyst is formed on the wall surfaces, but the hardness of the thin film is about 5H in the case of conventional antifouling coating material, which is nearly equivalent to hardness of human nails, and when it is scratched with something sharp at the end, there were problems in that the thin film broke or exfoliated from walls . In the event that the composition ratio of mixture substances are varied to have hardness exceeding 5H, there is a problem in which cracking is generated in the thin film when the conventional antifouling coating material is applied and dried.
(4) Furthermore, titanium dioxide does not exhibit hydrophilicity unless it is irradiated with ultraviolet energy and it has a problem in that during the nighttime, functions utilizing hydrophilicity cannot be used.
(5) In addition, as a coating material for inner walls, when a silver complex is mixed with titanium dioxide, both titanium dioxide and silver complex themselves are chemically stable substances. Consequently, even when titanium dioxide and a silver complex are mixed and melted in a melt, they neither chemically nor physically combine and are independent from each other in the melt and get into a dispersed state. Consequently, titanium dioxide and a silver complex do not mix homogeneously unless the solution is thoroughly agitated and a solution in an inhomogeneously mixed state only is obtained. And even though they are thoroughly agitated and homogeneously mixed, after a while, they get into an inhomogeneously mixed state because of natural convection of the solution. Applying this kind of inhomogeneous mixture solution to a wall surface may result in dispersed antibacterial effects, and such inhomogeneity is not preferable not only from the viewpoint of working-effect but also from the viewpoint of working efficiency, and a means to uniformly mix titanium dioxide and a silver complex has been desired.
(6) Furthermore, in the event that a silver complex is mixed with titanium dioxide as a coating material for inner walls, environmental pollutant particles to be decomposed are not activated and are not decomposed even if they are irradiated with light unless they are brought into contact with catalyst titanium oxide. The antibacterial action and antifungal action of a silver complex does not effectively work on environmental pollutants when environmental pollutants exist in a place distant from a silver complex, and antibacterial capabilities which a silver complex possesses cannot be given full play. Because in the event that conventional titanium dioxide and a silver complex are simply mixed, either substance does not have a function to positively capture and hold environmental pollutants, there is a problem in that the decomposition efficiency of environmental pollutants is eventually unable to be improved, because there are many cases in which environmental pollutants are located far from titanium dioxide and silver.

### OBJECTS AND SUMMARY OF THE INVENTION

Consequently, objects of the present invention are to provide an antifouling coating material as coating material for outer walls that can improve decomposition performance of titanium dioxide, can carry out photocatalytic reactions at high efficiency, and at the same time can improve durability by improving hardness of a thin film without causing cracking after applying and drying, and to provide antibacterial coating material as coating material for inner walls which can be homogeneously mixed when titanium dioxide and a silver complex are mixed and can improve the decomposition efficiency of environmental pollutants by this homogeneous mixing.

Another object of the present invention is to provide coating material comprising an apatite composite photocatalyst solution containing a porous-apatite-supported photocatalyst and a polymethoxy polysiloxane solution containing polymethoxy polysiloxane, characterized in that the two substances are mixed and dispersed in order to solve the above problems.

In such event, it is desirable that the apatite composite photocatalyst solution contains at least apatite composite titanium dioxide particles with titanium dioxide coated with porous apatite, water-soluble solvent comprising acryl emulsion and silicon emulsion, and deionized water, and the polymethoxy polysiloxane solution contains a solvent at least comprising polymethoxy polysiloxane, ethanol and methanol as well as deionized water.

Still another object of the present invention is to provide coating material comprising a porous-apatite-supported photocatalyst and silver thiosulfate complex, characterized in that the two substances are mixed and melted in a melt.

An even further object of the present invention is to provide coating material comprising apatite composite titanium oxide powder with titanium dioxide covered with porous apatite; and silver thiosulfate complex, characterized in that the two substances are mixed and melted in a melt comprising acrylic emulsion, silicon emulsion, surfactant, and deionized water.

In this way, the coating material according to the present invention has the apatite comprising photocatalyst titanium dioxide and calcium phosphate that adsorbs atmospheric pollutants and polymethoxy polysiloxane, hydrophilic resin coating, mixed and dissolved to allow these materials to exhibit synergic effects, and can achieve detoxification of harmful substances adhering to wall surfaces, etc. and antifouling of wall surfaces. At the same time, surface preparation when mixed liquid material is applied to wall surfaces, etc. can be eliminated. In addition, adhesion of the mixed liquid material to wall surfaces can be increased and application operation can be made easy. In addition, by adjusting the ratio of hardening agent contained in the mixed liquid material, hardness of thin film formed by application and drying of the liquid material can be increased to 5H or higher and mechanical strength of the thin film itself can be increased. By the way, because in the mixed liquid material of the present invention, polymethoxy polysiloxane which exhibits hydrophilicity irrespective of irradiation of ultraviolet rays is included, the film provides hydrophilicity even during the nighttime, too.

In addition, because the coating material according to the present invention is produced by mixing and melting a porous-apatite-supported photocatalyst and silver thiosulfate complex in a melt, and by mixing and melting apatite composite titanium oxide powder with titanium dioxide covered with porous apatite and silver thiosulfate complex in a melt comprising acrylic emulsion, silicon emulsion, surfactant, and deionized water, the photocatalyst and silver thiosulfate complex physically combine via apatite in a homogeneously mixed state, and by this, the homogeneous mixed state is reflected and a bound mixture with uniform mixture ratio can be generated. And once they combine, they do not separate easily and are in a stable combinedstate, and the mixture ratio can be held constant without agitating the solution. Because apatite not only functions as a binder that combines the photocatalyst with silver thiosulfate complex but also works as a pollutant capturing material that captures various germs and fungi which float and move in the air, pollutants are attracted close to the photocatalyst or silver complex, decomposed, and adsorbed into the atmosphere as harmless gas. That is, decomposition is carried out efficiently and the decomposition efficiency of pollutants can be improved.

### BRIEF DESCRIPTION OF THE DRAWINGS

Fig. 1 is acceleration test measurement results of a sample of coating material for outer walls according to the present invention and a sample applied with a commercially available weathering agent; and
Fig. 2 is a table that indicates the pollutant decomposition efficiency of coating material for inner walls according to the present invention.

### DESCRIPTION OF THE PREFERRED EMBODIMENTS

Next description will be made on preferred embodiments of the present invention.

First of all, an embodiment of coating material for outer walls according to the present invention will be described.

The coating material for outer walls according to the present invention is prepared by mixing and dispersing a composite type titanium dioxide melt containing apatite composite titanium dioxide powders with titanium dioxide coated with porous apatite, deionized water, acrylic emulsion, silicon emulsion, and surfactant, as well as room-temperature curing type inorganic polysiloxane resin solution in which polymethoxy polysiloxane is melted in a solvent comprising ethanol, methanol, and deionized water.

Titanium dioxide fine powders contained in the apatite composite titanium dioxide solution allows titanium dioxide to support porous apatite comprising calcium phosphate, and the use of titanium dioxide fine powders that support this kind of porous apatite helps titanium dioxide work efficiently as a photocatalyst and dramatically improves the decomposition efficiency of pollutants. That is, in order for titanium dioxide to work on pollutants to decompose and to decompose the pollutants by photochemical oxidation decomposition reactions, the pollutants must be brought physically in contact with titanium dioxide. Apatite works to generate physical contacts more frequently.

Because titanium dioxide itself provides no property to adsorb and hold pollutants, it decomposes substances only which happen to adhere. On the other hand, porous apatite comprising calcium phosphate provides a property to selectively adsorb and hold pollutants but cannot decompose pollutants. Therefore, apatite-supported titanium dioxide is used. In the event that titanium dioxide is allowed to support apatite, the titanium dioxide fine particle surface is exposed but apatite is formed convexly perpendicular to the surface. Because of this convexly protruded structure, even when the apatite composite titanium dioxide solution is directly applied to walls, etc, the exposed portion of titanium dioxide does not come in direct contact with wall material if the wall is flat. Consequently, oxidizing action of titanium dioxide as photocatalytic action is not exerted to the wall surface, eliminating surface preparation which has been required in the past. By doing so, pollutants are adsorbed and held to apatite but the pollutants come in direct contact with titanium dioxide, too. Because in this way, pollutants are brought in contact with titanium dioxide, titanium dioxide works efficiently as a photocatalyst and the decomposition efficiency of pollutants is dramatically improved.

The acrylic emulsion and silicon emulsion which are contained in the apatite composite titanium dioxide solution are added for the purpose to increase adhesion of final-produced liquid to the wall substrate and hydrophilicity of final-produced mixture liquid. By the adhesion which the acrylic emulsion possesses, the mixture liquid does not run off when applied to walls but sticks fast to walls, eliminating elaborate curing operation to the base material which has been required in the past and achieving simplification of the coating process. By the way, a surfactant is added to keep the mixture liquid slightly acidic so that the mixture liquid exhibits the best antifouling effect.

The room-temperature curing-type inorganic polysiloxane resin solution comprises polymethoxy polysiloxane melted in a solvent comprising ethanol, methanol, and deionized water as described above. This polymethoxy polysiloxane provides hydrophilicity and has function to reinforce mechanical strength of thin film formed by applying and drying the liquid agent. Ethanol and methanol provide volatility to the mixture liquid and promotes drying of the mixture liquid after applying it to wall surfaces.

To the foregoing apatite composite titanium dioxide solution, the polymethoxy polysiloxane solution is mixed to produce a mixture liquid with hydrophilicity. When this mixture liquid is applied to wall surfaces, rainwater, etc. which splashes on the wall surfaces does not form water drops but forms a thin water film and is distributed nearly uniformly over the whole wall surface. Consequently, harmful substances dissolved in water are uniformly dispersed, adsorbed, and held to coated apatite composite titanium dioxide, and decomposed. That is, no localized irregular photocatalytic action occurs and stable and highly efficient photocatalytic effects can be obtained. By the way, the polymethoxy polysiloxane mixture ratio is adjusted so that the hardness of a thin film formed by application and drying of the liquid material ranges from 6H to 10H and mechanical strength of the thin film itself is increased. Since the hardness of human nail is nearly 5H, the thin film which provides hardness exceeding 6H is free of scratches even when it is scratched by nail and mechanical durability of the thin film can be improved. When the hardness is increased over 10H, cracking occurs in the thin film when it is applied and dried. In addition, excessively increasing hardness more than required may cause deformation to the wall material. Because of these reasons, thin films whose hardness exceeds nearly 10H are excluded from the scope of manufacturing conditions but needless to say, the liquid material which provides hardness exceeding 10H can be produced as required.

In addition, rainwater flows nearly along paths which are formed casually by rainwater that trickles down along outer walls at the time of rain in the event that no special treatment is provided to the outer wall surfaces, and dust, oil stains, etc. adhering to outer walls of housing are exerted with water surface tension and nearly trickle along the paths formed in the casual process, and dust and oil stains which are unable to be flushed away stick to the outer walls in patchy patterns along the paths, spoiling the appearance of housing. Because the liquid material according to the present invention surmounts the surface tension and provides hydrophilicity, applying this liquid material to walls prevents rainwater from forming paths and allows rainwater to trickle down, and antifouling effects are obtained.

Now, a specific embodiment will be discussed.

The apatite composite titanium dioxide solution is liquid material with titanium dioxide fine powders that support porous apatite comprising calcium phosphate melted in a solution in which deionized water, acrylic emulsion, silicon emulsion, and surfactant are mixed, and in the present embodiment, commercially available apatite composite titanium dioxide 20% solution (available from Godai, Inc.) is used. This apatite composite titanium dioxide 20% solution is prepared by mixing 2 wt% to 3 wt% apatite-supported titanium dioxide fine powders, nearly 92 wt% to 93 wt% deionized water, nearly 2 wt% acrylic emulsion, nearly 1 wt% silicon emulsion, and nearly 2 wt% surfactant to give a total ratio of 100%.

The polymethoxy polysiloxane 1% solution (brand name: Sinsuifuro MS-1200 available from Dainippon Shikizai Kogyo Co, Ltd.) is obtained by mixing nearly 1 wt% room-temperature curing inorganic polysiloxane resin, 40 wt% to 50 wt% ethanol, 1 wt% to 10 wt% of methanol, and 40 wt% to 50 wt% of deionized water to give a total ratio of 100%.

This apatite composite type titanium dioxide 20% solution is added in the ratio ranging from 10% to 20%, polymethoxy polysiloxane 1% solution in the ratio ranging from 80% to 90%, and deionized water in the ratio ranging from 0% to 10%, respectively, to give a total ratio of 100%, and while the temperature of mixture liquid is being heldnearly to 35°C (±5°C), the mixture liquid is stirred by an stirrer until the mixture liquid is free of any irregular mixture. The rule-of-the-thumb stirring time when the mixture liquid is free of irregular mixture is about 20 minutes (±5 minutes) per 10 L.

The solution mixed and prepared in this way is applied to a wall surface by brush, etc. When the solution is dried, a photocatalyst thin film is formed on the applied surface but when polymethoxy polysiloxane 1% solution is added 80%, nearly 8H hardness is obtained with the thin film, and the thin film with satisfactory mechanical strength and sufficient durability is able to be obtained. By the way, this mixture liquid can maintain its properties for more than 1 year if stored in a regular cool and dark location. Consequently, it is easy to store and no special care is required to handle the mixture solution.

Changes with time of the thin film and the coated material generated by applying and drying the photocatalytic liquid material according to the present invention are measured by acceleration tests. For the acceleration tests, the testing method provided in JIS B-7754 is adopted. That is, the photocatalytic thin film generated by applying and drying is placed in the 89°C atmosphere, and while the thin film is being constantly irradiated with a xenon lamp, glossiness of the coated material is measured at constant time intervals, and when glossiness drops to nearly 40 or lower with the glossiness before the start of acceleration test designated as 100, it is judged that the coated material is degraded. By the way, 1500 hours in the present acceleration test correspond to 5 years under the non-accelerated regular state.

### P. 9

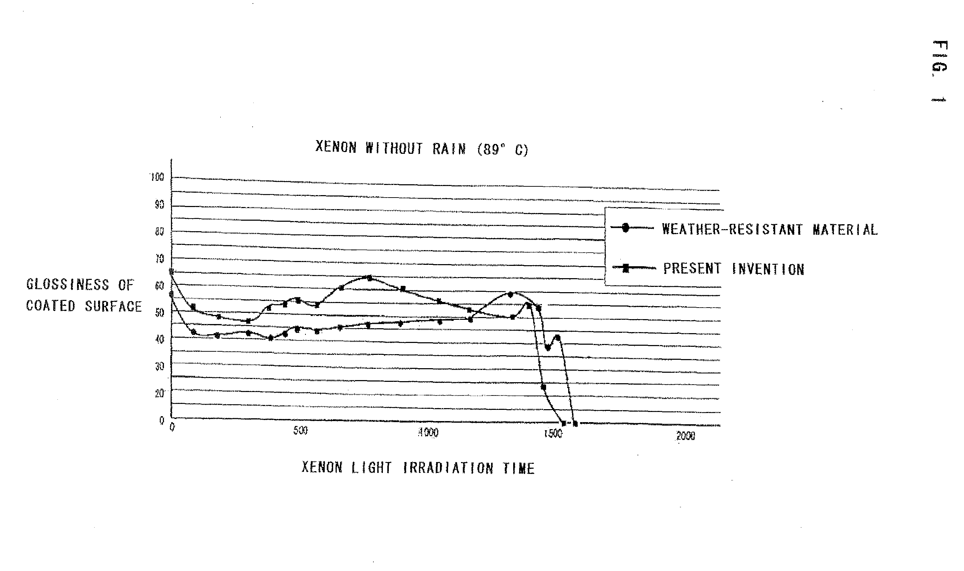

Fig. 1 shows the measurement results. The X-axis plots the xenon lamplight irradiating time and the Y-axis plots glossiness of the coated surface. Changes with time of glossiness of samples applied with the photocatalytic liquid material according to the present invention are plotted by the use of solid squares (■). As clear from the figure, even after 1300 hours pass, the glossiness remains 40 or higher and it can be judged that the coated material is free of deterioration. That is, under the normal application condition, chalking does not occur on the coated material for more than 4 years. For your reference, changes with time of glossiness of samples applied with a vehicle coating protection agent (brand name: None) with superb weatherability, which is primarily used for protection of vehicle coating are plotted by the use of solid circles (●). Based on this measurement result, the photocatalytic liquid material according to the present invention provides weatherability nearly equivalent to that of the commercially available vehicle coating protection agent with superb weatherability.

Next discussion will be made on an embodiment of a coating material for inner walls with titanium dioxide and silver complex mixed according to the present invention.

The coating material for inner walls according to the present invention is prepared by melting, and mixing and dispersing powders of apatite composite type titanium dioxide comprising titanium dioxide coated with porous apatite and silver thiosulfate complex in a composite titanium dioxide melt comprising deionized water, acrylic emulsion, silicon emulsion, and surfactant.

As described above, the use of porous-apatite-supported titanium dioxide powders can dramatically improve the decomposition efficiency of pollutants and oxidation action of titanium dioxide as photocatalytic action is not exerted to the wall surface.

The apatite composite type titanium dioxide solution is a liquid material with titanium dioxide fine powders that support apatite comprising calcium phosphate melted in a solution in which deionized water, acrylic emulsion, silicon emulsion, and surfactant are mixed, and the use of commercially available apatite composite type titanium dioxide 20% solution can save the trouble of blending various kind of solutions and provide convenience, but needless to say, it may be prepared from raw materials, too. In such event, the apatite-supported titanium dioxide powders may be manufactured in accordance with the manufacturing method disclosed, for example, in Japanese Patent Application Laid-Open Publication No. 2002-172332. By the way, in order to secure light transmission, it is recommendable to pulverize titanium dioxide.

The silver thiosulfate complex is generated by the following means, which is a well-known technology. That is, silver acetate (CH₃COOAg) is dissolved in 40°C deionized water to prepare a saturated solution. To this saturated solution, sodium nitrite (Na₂SO₃·7H₂O) and sodium thiosulfate (Na₂S₂O₃·5H₂O) are successively melted to obtain a silver complex. To this solution containing the silver complex, silica gel (JIS B type) is mixed as a carrier to support the silver complex, and a silver thiosulfate complex inorganic antibacterial agent with a coating film comprising SiO₂ framework formed on the carrier surface using a sol-gel method is generated.

The mixture liquid generated as above is blended in accordance with the following mixing ratio. That is, apatite-supported titanium dioxide fine powders are mixed in the ratio ranging from 2 w% to 6 w%, silver thiosulfate complex inorganic antibacterial agent in the ratio ranging from 2 w% to 3 w%, deionized water in the ratio ranging from about 86 w% to 91 w%, acrylic emulsion in the ratio of about 2 w%, silicon emulsion in the ratio of about 1 w%, and surfactant in the ratio of about 2 w%, respectively, to give a total ratio of 100%. While the temperature of mixture liquid is being heldnearly to 35°C (±5°C), the mixture liquid is stirred by an stirrer until the mixture liquid is free of any irregular mixture. The rule-of-the-thumb stirring time when the mixture liquid is free of irregular mixture is about 20 minutes (±5 minutes) per 10 L.

The solution mixed and prepared in this way is applied to a wall surface by rush, etc.

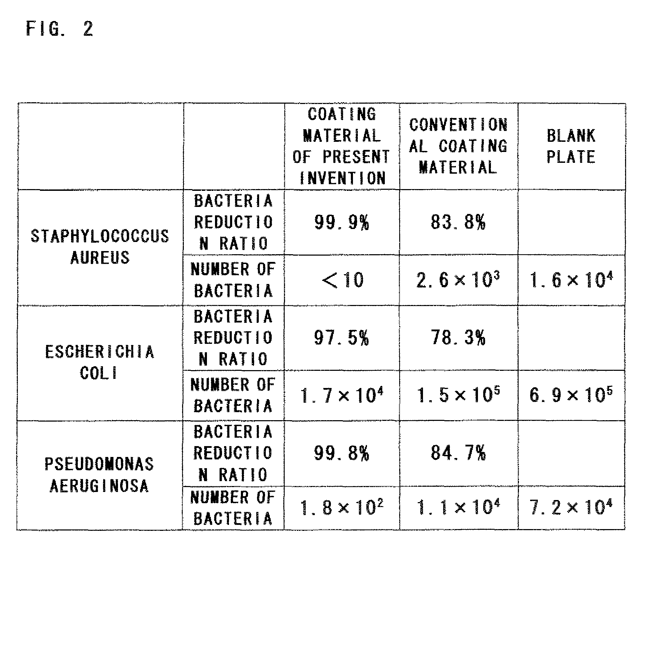

Fig. 2 is a table that shows the pollutants decomposition efficiency of the coated material for inner walls according to the present invention when it is compared with a conventional example. The testing method conforms to JIS Z 2801 (Film Adherence Method). For the test, three kinds of strains, namely, Staphylococcus aureus II D 1677, Escherichia coli IFO 3972, and Pseudomonas aeruginosa IFO 3080, are used. Culture media of three conditions, that is, bacteria culture medium applied with the coating material according to the present invention, bacteria culture medium applied with conventional coating material, and bacteria culture medium with nothing applied (blank plate in the table) are prepared, and to these culture media, relevant bacteria are inoculated and the number of bacteria after culture media are incubated for 2 hours under UV irradiation is compared with respect to the culture media of three conditions. The number of inoculated bacteria is 1.2 x 10⁵ for Staphylococcus aureus II D 1677, 2.7 x 10⁵ for Escherichia coli IFO 3972, and 1.7 x 10⁵ for Pseudomonas aeruginosa IFO 3080.

The test results indicate that when the coating material for inner walls according to the present invention is applied, the antimicrobial effect, that is, the pollutants decomposition efficiency, is improved as compared to the conventional coating material and achieves high values.

As described above, in the coating material according to the present invention, apatite comprising calcium phosphate which adsorbs environmental pollutants is supported by photocatalyst titanium dioxide fine powders, and the powders are melted in a melt with tackiness, and an apatite composite type titanium dioxide solution is prepared. Then, silver thiosulfate complex is added to the apatite composite type titanium dioxide solution to prepare a mixture liquid. In adding and mixing, the mixture liquid is forcibly stirred and apatite-supported titanium dioxide and silver thiosulfate complex are homogeneously mixed. Under the homogeneously mixed state, the silver thiosulfate complex is adsorbed and supported by apatite. That is, titanium dioxide and silver thiosulfate complex are physically combined via apatite.

In this way, titanium dioxide and silver thiosulfate complex are physically combined under the homogeneously mixed condition. That is, the homogeneously mixed condition is reflected and combined mixture with an equal mixture ratio is generated. Once combined, the mixture does not easily separate and gets into a stable combined condition, and the mixture ratio is kept constant even without stirring the solution. On the other hand, in the conventional mixture in which no apatite is present, titanium dioxide and silver thiosulfate complex are not physically combined and even if the solution is stirred, the mixture condition of these substances is unable to be held to the condition right after stirring. The homogeneous mixing effect of the present invention described above produces an effect to eliminate the stirring operation of the mixture liquid before applying the mixture liquid, achieving shortening of working hours for application.

Apatite not only works as a binder that combines titanium dioxide with silver thiosulfate complex but also works as pollutants capturing material such as various bacteria and fungi which float and move in the air. Because the apatite possesses the capturing power, pollutants are attracted close to titanium dioxide and silver complex, decomposed, and adsorbed into the atmosphere in the form of harmless gas. That is, decomposition takes place efficiently and an effect to improve the pollutants decomposition efficiency is produced.

The coating material for outer walls according to the present invention decomposes and detoxifies air pollutants without generating harmful byproducts and can be directly applied to walls. The energy required for decomposition is sunlight only, and purifies the air without contaminating or destructing the environment. Consequently, the coatingmaterial for outer walls according to the present invention provides a remarkably high industrial utility value as, for example, outer wall coating material or environmental remediation material.

In addition, the coating material for inner walls according to the present invention decomposes and detoxifies various bacteria, fungi, and other contaminants that float in a room without generating harmful byproducts and can be directly applied to walls. For the energy required for decomposition, ultraviolet rays emitted by fluorescent lamps, interior light, is enough for the coating material to exhibit desired effects. At the Same time, the coating material for inner walls according to the present invention purifies the air without contaminating or destructing the environment. Consequently, the coating material for inner walls according to the present invention provides a remarkably high industrial utility value as coating material for inner walls which serves for environmental remediation.

## Claims

1. Coating material, comprising:
an apatite composite photocatalyst solution containing a porous-apatite-supported photocatalyst; and
a polymethoxy polysiloxane solution containing polymethoxy polysiloxane,
**characterized in that** the two solutions are mixed and dispersed.

2. The coating material according to claim 1 wherein the apatite composite photocatalyst solution contains at least apatite composite titanium dioxide particles with titanium dioxide coated with porous apatite, water-soluble solvent comprising acryl emulsion and silicon emulsion, and deionized water, and the polymethoxy polysiloxane solution contains a solvent at least comprising polymethoxy polysiloxane, ethanol and methanol as well as deionized water.

3. Coating material, comprising:
a porous-apatite-supported photocatalyst; and
silver thiosulfate complex,
**characterized in that** the two substances are mixed and melted in a melt.

4. Coating material, comprising:
apatite composite titanium oxide powder with titanium dioxide covered with porous apatite; and
silver thiosulfate complex,
**characterized in that** the two substances are mixed and melted in a melt comprising acrylic emulsion, silicon emulsion, surfactant, and deionized water.
